# DEMANDE DE BREVET EUROPEEN

(11) **EP 4 331 954 A1**
(43) Date de publication de la demande: **06.03.2024**
(21) Numéro de dépôt: 23183992.9
(22) Date de dépôt: 06.07.2023
(51) Int. Cl.: B62D 21/03, B62D 21/15

(54) **STRUCTURE DE PLANCHER DE VÉHICULE ÉQUIPÉE DE DISPOSITIFS DE PROTECTION LATÉRALE**

(30) Priorité: 22.08.2022 FR 2208423
(71) Demandeur: Renault s.a.s, 92100 Boulogne Billancourt (FR)
(72) Inventeur: FARGEAS, Nicolas, 78640 Villiers Saint Frédéric (FR); GOUZY, Frederic, 78640 Villiers Saint Frédéric (FR)

(57) **Abrégé**

L'invention concerne une structure de plancher (10) de véhicule formée d'une partie avant comprenant un châssis de cabine (120) et d'une partie arrière comprenant deux longerons (140) et une pluralité de traverses (143) reliant les longerons, les longerons de la partie arrière étant solidaires d'un soubassement du châssis de cabine, caractérisée en ce que chaque longeron (140) est équipé d'un dispositif de protection latérale (20) comprenant :
- une poutre de protection (22) dont une extrémité (220) est solidaire du châssis de cabine, ladite poutre de protection s'étendant parallèlement au longeron depuis le châssis de cabine sur une portion de longueur de la partie arrière, et,
- dans le prolongement de chaque traverse (143) située au niveau de la portion de longueur de la partie arrière, un boîtier absorbeur de choc (24) solidaire de la poutre de protection et du longeron.

## Description

L'invention concerne une structure de plancher de véhicule équipée de dispositifs de protection latérale, notamment d'un module de stockage de l'énergie ou d'un élément sensible à protéger.

Depuis plusieurs années, l'impact des véhicules sur les conditions environnementales est au centre des préoccupations des constructeurs automobiles et de leurs clients. En particulier, le véhicule électrique, à usage particulier ou utilitaire, apparaît aujourd'hui comme une nécessité pour répondre aux exigences de plus en plus sévères de réduction des émissions polluantes.

Certains véhicules utilitaires présentent une structure de plancher formée d'une partie avant comprenant un châssis de cabine et d'une partie arrière comprenant deux longerons et une pluralité de traverses reliant les longerons. La partie arrière est destinée à être équipée en usine, ou chez des carrossiers transformateurs, d'une structure adaptée au besoin du client. Cette structure vient reposer sur les longerons et traverses de la partie arrière tout en étant fixée à cette dernière. La structure peut être une cellule fermée, réfrigérée ou non, une benne à ridelles ou un simple plateau.

Lorsqu'un véhicule utilitaire de ce type, aussi appelé véhicule de type châssis cabine, comprend une batterie de traction électrique, le châssis doit assurer la protection de la batterie, notamment aux chocs latéraux, quelle que soit la structure qui équipe la partie arrière du châssis cabine. Cette protection est essentielle pour maintenir la batterie solidaire du véhicule en cas de choc latéral et éviter ainsi son endommagement ainsi que les inconvénients liés à un endommagement, à savoir les risques environnementaux liés à des fuites de produits chimiques dans l'environnement, les risques d'incendie liés à une dégradation importante de la batterie et les coûts de remplacement et de réparation de la batterie.

Le document EP2729348B1 décrit ainsi une structure de plancher pour véhicule comprenant deux longerons principaux reliés par des traverses entre lesquels sont disposés des modules de stockage d'énergie. Cette structure est intégrée au véhicule. Les traverses comprennent des zones de déformation à comportement défini. Il est également prévu deux longerons secondaires situés latéralement à l'extérieur des longerons principaux et reliés par deux traverses supérieures s'étendant au-dessus des longerons principaux et secondaires. Ces traverses supérieures sont solidaires d'une face supérieure horizontale des longerons et peuvent être fixées ou non aux longerons principaux. Les traverses supérieures présentent également des zones de déformation situées transversalement entre les longerons principaux et secondaires. Du fait de cet agencement des traverses supérieures, ces dernières peuvent être désolidarisées des longerons en cas de choc latéral, ce qui n'est pas souhaitable. Dans un mode de réalisation, des zones de déformation supplémentaires situées entre les longerons principaux et secondaires s'étendent transversalement dans le même plan que ces longerons, mais ne sont pas dans l'alignement des traverses. Si elles permettent d'absorber de l'énergie, ces zones de déformation supplémentaires sont cependant susceptibles d'engendrer une déformation des longerons principaux et une dégradation des modules de stockage d'énergie, ce qui n'est pas souhaitable. La structure décrite dans ce document présente également l'inconvénient d'être spécifique : elle ne peut pas être adaptée à une structure de plancher existante d'un véhicule.

Le document DE102018206118 décrit une structure de montage de batterie qui est disposée entre les longerons de la caisse du véhicule. Cette structure comprend des poutres longitudinales et transversales et est reliée aux longerons du véhicule par des boîtiers déformables de type crash-box qui sont disposés entre les poutres longitudinales et les longerons du véhicule, dans l'alignement des traverses. Dans un mode de réalisation, les boîtiers déformables sont reliés à des poutres longitudinales qui sont fixées sous les longerons du véhicule. Il existe toutefois un risque de désolidarisation de la structure de montage en cas de choc, notamment si les fixations de la structure de montage aux longerons du véhicule cèdent. En effet, les longerons du véhicule ne sont pas protégés en cas de choc, de sorte que la structure du véhicule est susceptible d'être détériorée. De plus, la distance entre les longerons conditionne la largeur du véhicule et la place disponible suivant la dimension transversale du véhicule pour l'implantation de la batterie. Le volume de la batterie est de ce fait limité, ce qui limite également l'autonomie du véhicule.

Il existe donc un besoin pour une structure de plancher de véhicule permettant une protection efficace d'une batterie ou d'un élément sensible, en particulier limitant les risques de désolidarisation de la batterie ou de l'élément sensible. Il existe également un besoin pour modifier facilement une structure de plancher de véhicule existant et y ajouter une protection de batterie. Il existe enfin un besoin pour une structure de plancher de véhicule pouvant être réparée à moindre coût à la suite d'un choc latéral.

A cet effet, l'invention concerne une structure de plancher de véhicule formée d'une partie avant comprenant un châssis de cabine et d'une partie arrière comprenant deux longerons et une pluralité de traverses reliant les longerons, les longerons de la partie arrière étant solidaires d'un soubassement du châssis de cabine, caractérisée en ce que chaque longeron est équipé d'un dispositif de protection latérale comprenant :
- une poutre de protection dont une extrémité est solidaire du châssis de cabine, ladite poutre de protection s'étendant parallèlement au longeron depuis le châssis de cabine sur une portion de longueur de la partie arrière, et,
- dans le prolongement de chaque traverse située au niveau de la portion de longueur de la partie arrière, un boîtier absorbeur de choc solidaire de la poutre de protection et du longeron.

Chaque dispositif de protection latérale comprend ainsi une poutre de protection latérale et un ou plusieurs boîtiers absorbeurs de choc, typiquement au moins deux boîtiers absorbeur de choc. Les boîtiers absorbeur de choc étant disposés dans le prolongement des traverses, en cas de choc latéral les efforts subis par les poutres sont transférés de manière optimale aux traverses de la structure de plancher et préservent les longerons. Les parties avant et arrière de la structure de plancher peuvent en outre être communes à plusieurs types de véhicule (véhicule thermiques ou électriques), les dispositifs de protection latéraux étant ajoutés à la partie arrière et n'en faisant pas partie.

Les longerons peuvent présenter une cavité longitudinale. Dans ce cas, un renfort interne peut avantageusement être fixé à l'intérieur de la cavité du longeron dans le prolongement transversalement de chaque boîtier absorbeur de choc, ce renfort interne s'étendant depuis une paroi latérale de la cavité jusqu'à une paroi latérale opposée de celle-ci dans une direction transversale. Ceci permet d'améliorer le passage des efforts entre les boîtiers absorbeurs de choc et les traverses tout en limitant l'écrasement du longeron.

En particulier, chaque renfort interne peut comporter au moins deux parois d'accostage appliquées contre chaque paroi latérale de la cavité. Ceci permet d'améliorer la résistance à la compression des renforts internes.

De manière préférée, chaque dispositif de protection latérale peut être assemblé de manière démontable à la structure de plancher (par exemple par des systèmes vis-écrous) pour un montage/démontage plus aisé. Les réparations en après-vente en cas de petit choc sont ainsi plus rapides et moins coûteuses qu'une solution soudée. Il suffit en effet de dévisser le dispositif de protection latéral endommagé et de le remplacer par un neuf. Une solution soudée nécessiterait des travaux de carrosserie (découpe, soudure, peinture, etc) longs et coûteux. Cette solution démontable permet également de conserver un process en usine identique entre des versions de structures de plancher thermiques et électriques. Les dispositifs de protection latérale étant montés à la fin du cycle de fabrication du véhicule, cela évite par exemple des problèmes d'accessibilité des pinces à souder pour la réalisation d'un certain nombre de points de soudure sur la structure de plancher, ce qui ne serait pas le cas avec un montage plus en amont des dispositifs de protection latérale.

Ainsi, avantageusement, chaque boîtier absorbeur de choc peut être fixé à un longeron par des systèmes vis-écrous. Ceci permet un montage/démontage aisé des dispositifs de protection latérale sur la structure de plancher. Dans un mode de réalisation, l'écrou de chaque système vis-écrou peut être solidaire d'un renfort interne. Ceci permet de faciliter l'assemblage des renforts internes et des boîtiers absorbeurs de choc aux longerons. Avantageusement, chaque poutre de protection peut être fixée au châssis de cabine par des systèmes vis-écrou. Ceci permet également de faciliter l'assemblage de la poutre de protection à la structure de plancher. Dans un mode de réalisation, la vis de chaque système vis-écrou peut être solidaire du châssis de cabine ou d'une pièce de renfort solidaire du châssis de cabine. Ceci permet de faciliter davantage l'assemblage de la poutre de protection à la structure de plancher en assurant un pré-positionnement et un pré-maintien de la poutre par rapport au châssis cabine, par insertion des vis dans des orifices prévus à cet effet de brides ou d'une platine solidaire de l'extrémité de la poutre de protection.

Les pièces du dispositif de protection latérale peuvent être assemblées entre elles par soudage lorsqu'elles sont réalisées en un même matériau, ou par vissage ou rivetage lorsqu'elles sont en des matériaux différents. On préfèrera toutefois utiliser un même matériau pour les différentes pièces d'un dispositif de protection latérale.

Il est ainsi possible de réaliser chaque dispositif de protection latérale en un matériau différent de celui des longerons de la structure de plancher, ces derniers étant typiquement en acier. Bien que cela ne soit pas préféré, on pourra néanmoins réaliser chaque dispositif de protection latérale en acier : un assemblage par soudure aux longerons est alors envisageable. Ainsi, chaque dispositif de protection latérale peut être en aluminium ou en acier. On utilisera de préférence l'aluminium, et en particulier l'aluminium extrudé, pour réduire le poids par rapport à une solution en acier et réduire le cout des investissements en outillage (l'outillage pour une pièce en aluminium, notamment en aluminium extrudé est moins couteux qu'un outillage pour du profilage de pièce en acier). La fabrication des pièces du dispositif de protection latérale en aluminium extrudé permet également de faire varier les épaisseurs des différentes parois. Cela permet d'optimiser le poids du dispositif en appliquant de fortes épaisseurs dans les zones fortement sollicitées en choc. On peut également plus facilement travailler sur la forme et le nombre des parois à l'intérieur de chaque pièce du dispositif de protection latérale.

Pour une meilleure absorption des chocs, chaque poutre de protection peut présenter au moins une cavité s'étendant parallèlement au longeron, et chaque boîtier absorbeur de choc peut présenter au moins une cavité s'étendant perpendiculairement aux longerons.

A titre d'exemple, chaque poutre de protection ou chaque boîtier absorbeur de choc peut présenter plusieurs cavités séparées par une paroi interne. Avantageusement, ces parois s'étendent alors parallèlement au plan contenant les longerons et traverses. Ainsi, en cas de choc, ces parois internes participent au transfert des efforts.

Avantageusement, chaque poutre de protection et chaque boîtier absorbeur de choc peuvent s'étendre sur une hauteur, mesurée perpendiculairement à un plan contenant les longerons et les traverses, égale ou sensiblement égale à la hauteur des longerons. Ceci permet une meilleure absorption de l'énergie d'un choc et une meilleure répartition de cette énergie sur l'ensemble des longerons et traverses.

La structure de plancher selon l'invention peut également comprendre une structure de support d'au moins un module de stockage de l'énergie fixée à la structure de plancher, sous celle-ci. La structure de support s'étend alors entre les longerons et les traverses de la partie arrière sur une portion de longueur de celle-ci. Dans ce cas, les dispositifs de protection latérale s'étendent sur toute la longueur de cette portion de longueur de la partie arrière. L'invention a également pour objet un véhicule automobile comprenant une structure de plancher selon l'invention. L'invention est tout particulièrement adaptée aux véhicules électriques ou hybrides de type utilitaire.

D'autres particularités et avantages de l'invention ressortiront à la lecture de la description faite ci-après de plusieurs modes de réalisation particuliers de l'invention, donnés à titre indicatif mais non limitatifs, en référence aux dessins annexés sur lesquels :
[Fig. 1] la figure 1 est une vue en perspective d'une structure de plancher de véhicule selon un mode de réalisation de l'invention.
[Fig. 2] la figure 2 est une vue agrandie d'une partie de la figure 1.
[Fig. 3] la figure 3 représente une vue éclatée d'un dispositif de protection latérale d'une structure de plancher selon un mode de réalisation de l'invention.
[Fig. 4] la figure 4 représente une vue partielle de dessous de la structure de plancher selon un mode de réalisation de l'invention.
[Fig. 5] la figure 5 représente une vue de dessus partielle d'une structure de plancher selon un mode de réalisation de l'invention.
[Fig. 6] la figure 6 est une vue agrandie de la structure de plancher de la figure 5.
[Fig. 7] la figure 7 est une section transversale de la figure 3 prise le long d'une traverse.

Dans la présente description, les termes avant, arrière, supérieur, inférieur, font référence aux directions avant et arrière du véhicule, lorsque la structure de plancher selon l'invention est montée sur le véhicule. Les axes X, Y, Z, correspondent respectivement à l'axe longitudinal (d'avant en arrière), transversal (orienté vers la droite du véhicule) et vertical du véhicule, ce dernier reposant sur le sol. La direction verticale correspond ainsi à la direction de la gravité.

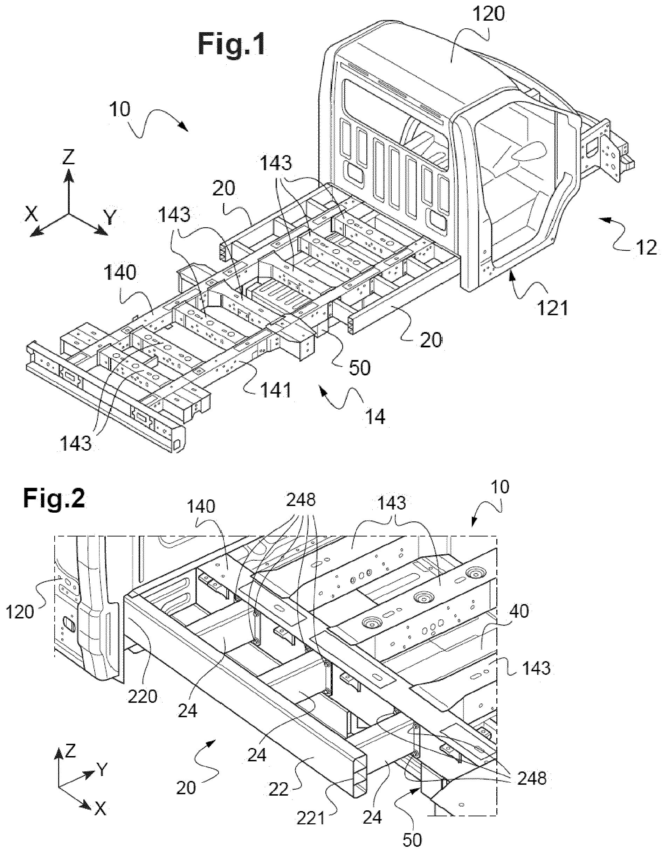

La figure 1 représente une structure de plancher 10 de véhicule formée d'une partie avant 12 comprenant un châssis de cabine 120 et d'une partie arrière 14 comprenant deux longerons 140, 141 et une pluralité de traverses 143 reliant les longerons 140, 141. Les longerons 140, 141 de la partie arrière 14 sont solidaires d'un soubassement 121 du châssis de cabine 120. De manière usuelle, pour davantage de rigidité, les longerons et les traverses, typiquement en acier, sont des pièces allongées creuses, de préférence à section transversale fermée, par exemple à section rectangulaire ou parallélépipédique. Ces pièces allongées peuvent être formées en deux parties assemblées l'une à l'autre et définissant une cavité interne s'étendant suivant leur direction longitudinale. La cavité interne 144 des longerons s'étend ainsi suivant la direction longitudinale de la structure de plancher 10 alors que la cavité interne 145 des traverses s'étend suivant la direction transversale de la structure de plancher 10. Ces deux parties peuvent comprendre une première partie à section transversale en forme de U dont l'ouverture est fermée par la deuxième partie sensiblement plane. L'invention n'est toutefois pas limitée à une forme particulière des deux parties formant un longeron ou une traverse.

Selon l'invention, la structure de plancher 10 est équipée sur chacun de ses côtés par un dispositif de protection latérale 20, fixé à un longeron 140, 141.

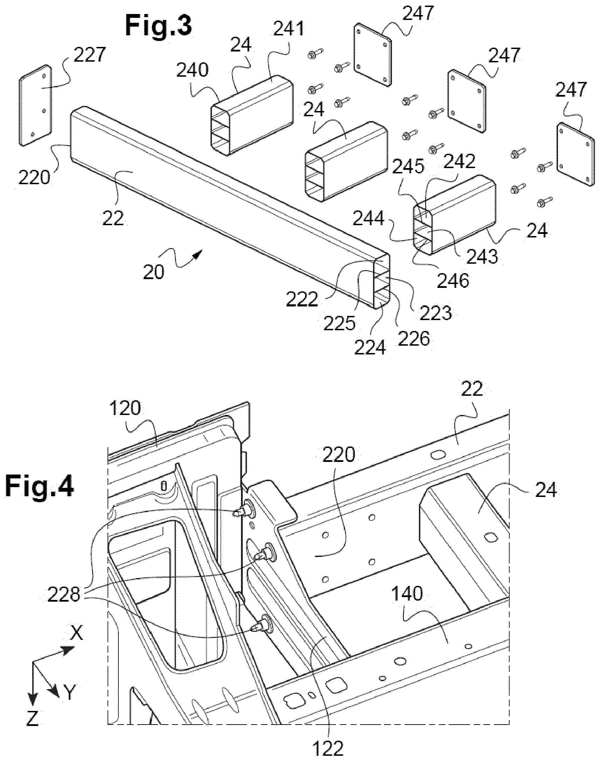

Tel que visible sur les figures 2 et 3, chaque dispositif de protection latérale 20 comprend une poutre de protection 22 dons une extrémité 220 est solidaire du châssis de cabine 120 et l'autre extrémité 221 est libre. La poutre de protection 22 s'étend parallèlement aux longerons 140, 141 depuis le châssis de cabine 120 sur une portion de longueur de la partie arrière de la structure de plancher 10.

Chaque dispositif de protection latérale 20 comprend en outre, dans le prolongement de chaque traverse 143 située au niveau de la portion de longueur de la partie arrière 14, un boîtier absorbeur de choc 24. Celui-ci est solidaire de la poutre de protection 22 et du longeron 140 ou 141 auquel est fixé le dispositif de protection latérale 20 concerné. Ainsi, chaque boîtier absorbeur de choc 24 est aligné avec une traverse 143 suivant la direction transversale, ce qui permet de transférer les chocs subis par la poutre de protection 22 d'un côté à l'autre du véhicule via les traverses 143.

Un exemple de réalisation d'un dispositif de protection latérale 20 est représenté sur la figure 3. Ici, la poutre de protection 22 comprend trois cavités 222, 223, 224 séparées par deux parois internes 225, 226. Ces cavités 222, 223, 224 s'étendent suivant la direction longitudinale de la poutre de protection 22, et sont donc parallèles aux longerons 141, 142 lorsque le dispositif de protection latérale 20 est assemblé à la structure de plancher 10, comme on peut le voir sur la figure 1. Les parois internes 225, 226 s'étendent en outre horizontalement (dans le plan XY), à savoir parallèlement à la direction d'un choc latéral pour une meilleure absorption de l'énergie celui-ci. L'une des extrémités 220 de la poutre de protection 22 est fixée à une platine 227 percée d'orifices pour sa fixation au châssis de cabine 120. Le dispositif de protection latérale 20 comprend en outre ici trois boîtiers absorbeur de choc 24. Chaque boîtier absorbeur de choc 24 présente une extrémité 240 solidaire de la poutre de protection 22 et une autre extrémité 241 destinée à être fixée à un longeron 140, 141. Dans cet exemple, chaque boîtier absorbeur de choc 24 présente trois cavités 242, 243, 244 séparées par deux parois internes 245, 246. Ces cavités s'étendent suivant la direction longitudinale des boîtiers absorbeur de choc 24 et sont donc perpendiculaires aux longerons 141, 142 lorsque le dispositif de protection latérale 20 est assemblé. Comme pour la poutre de protection 22, les parois internes 245, 246 des boîtiers absorbeur de choc 24 s'étendent également horizontalement, parallèlement à la direction d'un choc latéral. L'extrémité 241 de chaque boîtier absorbeur de choc 24 est fixée à une platine 247 percée d'orifices pour sa fixation au longeron. En outre, la poutre de protection et chacun des boîtiers absorbeur de choc 24 présentent une hauteur, mesurée perpendiculairement à un plan contenant les longerons et les traverses, autrement dit mesurée suivant la direction verticale, qui est égale ou sensiblement (90 à 99%) égale à la hauteur des longerons.

Dans cet exemple, les différentes pièces du dispositif de protection latérale 20 sont avantageusement réalisées en aluminium, notamment par extrusion, et sont fixées les unes aux autres par des cordons de soudure. Il est alors possible de dimensionner aisément la poutre de protection 22 ainsi que chaque boîtier absorbeur de choc 24 de manière optimale pour absorber l'énergie d'un choc latéral défini. On pourra notamment déterminer une épaisseur des parois et/ou une hauteur et/ou une largeur (mesurée suivant la direction transversale lorsque le dispositif de protection latérale est assemblé à la structure de plancher 10) de chaque pièce appropriée(s) pour absorber l'énergie d'un choc latéral défini.

L'invention n'est toutefois pas limitée à ce mode de réalisation et notamment par le nombre de boîtiers absorbeur de choc 24, lequel va dépendre de la longueur de la poutre de protection 22 et du nombre de traverses 143 qui s'étendent perpendiculairement aux longerons sur cette partie de la structure de plancher. L'invention n'est pas non plus limitée par le nombre de cavités de chacune des pièces d'un dispositif de protection latérale 20. Ainsi, chaque pièce pourrait présenter une, deux ou plusieurs cavités selon la résistance souhaitée. L'invention n'est pas limitée non plus à des dimensions spécifiques des pièces et/ou à une épaisseur de leurs parois, lesquelles peuvent être adaptées en fonction des propriétés d'absorption de choc recherchées. Chacune de ces pièces pourrait enfin être réalisée en acier et non en aluminium. Dans ce cas, lorsqu'une pièce présente plusieurs cavités, elle est alors réalisée en plusieurs parties assemblées les unes aux autres.

Quel que soit le mode de réalisation d'un dispositif de protection latérale 20, ce dernier est de préférence fixé à la structure de plancher 10 de manière démontable, notamment par des systèmes vis-écrou. Ainsi, dans l'exemple représenté, l'extrémité 220 de la poutre de protection 22 est fixée au châssis de cabine 120 par des systèmes vis-écrou 223, ici au nombre de trois, alors que l'extrémité 240 de chaque boîtier absorbeur de choc 24 est fixée au longeron par des systèmes vis-écrou 248, ici au nombre de quatre. L'invention n'est bien entendue pas limitée par le nombre de systèmes vis-écrou 228, 248 qui pourra être choisi en fonction de la résistance aux chocs souhaités de l'assemblage.

Afin de faciliter le montage, on pourra avantageusement solidariser les vis des systèmes vis-écrou 228 au châssis de cabine 120 ou à une pièce de renfort 122 solidaire du châssis de cabine. Cette pièce de renfort 122, représentée figure 4, est par exemple une pièce en acier soudée au châssis de cabine 120 et s'étendant verticalement. La solidarisation de ces vis à cette pièce de renfort 122 (ou au châssis de cabine 120) permet de pré-positionner et de prémaintenir le dispositif de protection latérale 20 avant la mise en place des écrous, en insérant les vis au travers des orifices de la platine 227 de l'extrémité 220 de la poutre de protection. On pourra également faciliter le montage en solidarisant les écrous des systèmes vis-écrou 248 des boîtiers absorbeurs de choc 24 au longeron ou à un renfort interne 30 optionnel situé à l'intérieur de la cavité 144 d'un longeron.

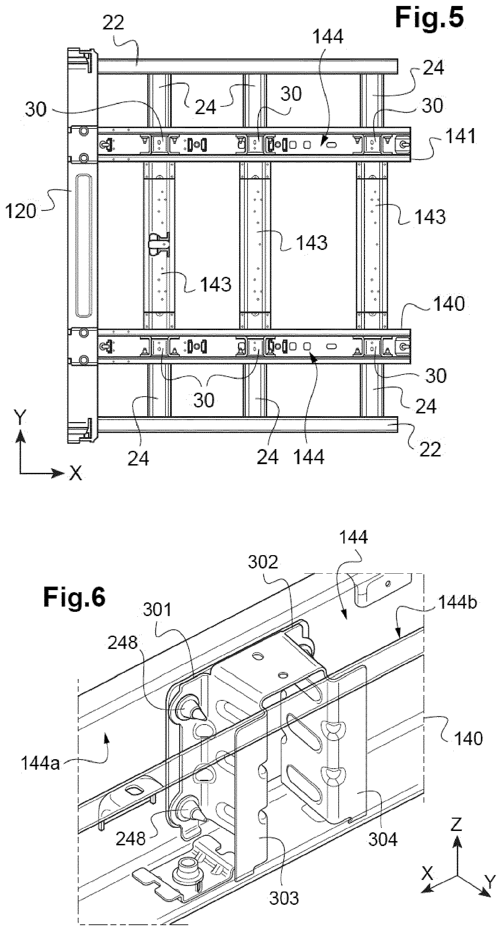

Ce renfort interne 30 est décrit plus en détail en référence aux figures 5 et 6. Il est fixé à l'intérieur de la cavité 144 du longeron 140, 141 dans le prolongement de chaque boîtier absorbeur de choc 24. Ainsi, la structure de plancher 10 est équipée d'autant de renforts internes 30 que le dispositif de protection latérale 20 comprend de boîtiers absorbeurs de choc 24. Chaque renfort interne 30 s'étend depuis une paroi latérale longitudinale 144a de la cavité 144 du longeron jusqu'à une paroi latérale longitudinale opposée 144b de la cavité dans la direction transversale. Dans l'exemple représenté figures 5 et 6, chaque renfort interne 30 comporte deux parois d'accostage 301, 302 appliquées contre la paroi latérale 144a de la cavité et deux parois d'accostage 303, 304 appliquées contre la paroi latérale 144b de la cavité. Les parois d'accostage 301, 302 portent les écrous soudés des systèmes vis-écrous 248 qui vont permettre la fixation des boîtiers absorbeur de choc 24 au longeron. Les deux autres parois d'accostage 303, 304 peuvent être fixées à la paroi latérale 144b par des points de soudure. Le renfort interne 30 peut être réalisé de manière très simple, par exemple par découpage et pliage d'une tôle en acier ou en aluminium. Dans l'exemple, il est formé d'une tôle pliée en U, chaque bord d'une aile du U étant replié sensiblement à angle droit vers l'extérieur du U pour former une paroi d'accostage (voir figure 6).

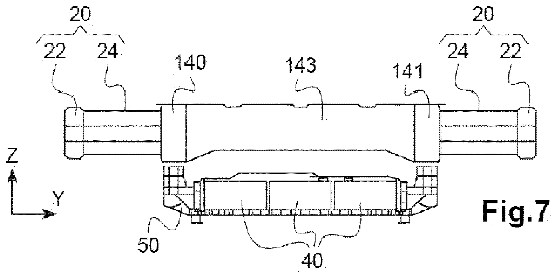

La structure de plancher 10 selon l'invention permet ainsi de protéger un ou plusieurs modules de stockage d'énergie 40, tels que des modules de batterie électrique, typiquement supportés par une structure de support 50 qui est fixée à la structure de plancher, sous celle-ci, généralement aux longerons 140, 141. Tel que visible sur les figures 1 et 7, la structure de support 50 s'étend entre les longerons 140, 141 et les traverses 143 de la partie arrière sur une portion de longueur de celle-ci. La structure de support 50 s'étend également en partie sous le soubassement du châssis de cabine 120. Tel que représenté sur ces figures, les deux dispositifs de protection latérale 20 s'étendent sur toute la longueur de la portion de longueur de la partie arrière sur laquelle s'étend la structure de support 50. Ainsi en cas de choc latéral, le dispositif de protection latérale 20 peut absorber l'énergie du choc, limiter la déformation du longeron de la structure de plancher auquel il est fixé, et ainsi limiter le risque d'une rupture des fixations de la structure de support 50 à ce longeron.

Les dispositifs de protection latérale 20 permettent de choisir une structure de support 50 conçue pour participer à la protection des modules de stockage d'énergie 40 ou non. On notera que ce type de dispositif de protection latérale 20 peut également équiper un véhicule thermique lorsqu'un élément sensible (réservoir ou autre) que l'on souhaite protéger des chocs latéraux est fixé à la structure de plancher à proximité du châssis de cabine. L'invention peut ainsi aussi bien s'appliquer à un véhicule automobile thermique qu'à un véhicule automobile électrique, bien qu'une utilisation pour un véhicule automobile électrique ou hybride soit préférée.

## Revendications

1. Structure de plancher (10) de véhicule formée d'une partie avant (12) comprenant un châssis de cabine (120) et d'une partie arrière (14) comprenant deux longerons (140, 141) et une pluralité de traverses (143) reliant les longerons, les longerons de la partie arrière étant solidaires d'un soubassement (121) du châssis de cabine, **caractérisée en ce que** chaque longeron (140, 141) est équipé d'un dispositif de protection latérale (20) comprenant :
- une poutre de protection (22) dont une extrémité (220) est solidaire du châssis de cabine, ladite poutre de protection s'étendant parallèlement au longeron depuis le châssis de cabine sur une portion de longueur de la partie arrière, et,
- dans le prolongement de chaque traverse (143) située au niveau de la portion de longueur de la partie arrière, un boîtier absorbeur de choc (24) solidaire de la poutre de protection et du longeron.

2. Structure de plancher (10) selon la revendication 1, **caractérisée en ce que** les longerons (140, 141) présentent une cavité longitudinale (144) et **en ce qu'**un renfort interne (30) est fixé à l'intérieur de la cavité du longeron dans le prolongement transversalement de chaque boîtier absorbeur de choc (24), ce renfort interne s'étendant depuis une paroi latérale (144a) de la cavité jusqu'à une paroi latérale opposée (144b) de celle-ci dans une direction transversale.

3. Structure de plancher (10) selon la revendication 2, **caractérisée en ce que** chaque renfort interne (30) comporte au moins deux parois d'accostage (301, 302 ; 303, 304) appliquées contre chaque paroi latérale (144a, 144b) de la cavité.

4. Structure de plancher (10) selon l'une quelconque des revendications 1 à 3, **caractérisée en ce que** chaque boîtier absorbeur de choc (24) est fixé à un longeron (140, 141) par des systèmes vis-écrou (248), optionnellement l'écrou de chaque système vis-écrou est solidaire d'un renfort interne (30).

5. Structure de plancher (10) selon l'une quelconque des revendications 1 à 4, **caractérisée en ce que** chaque poutre de protection (22) est fixée au châssis de cabine (120) par des systèmes vis-écrou (228), optionnellement la vis de chaque système vis-écrou est solidaire du châssis de cabine (120) ou d'une pièce de renfort (122) solidaire du châssis de cabine.

6. Structure de plancher (10) selon l'une quelconque des revendications 1 à 5, **caractérisée en ce que** chaque dispositif de protection latérale (20) est en aluminium ou en acier, de préférence en aluminium.

7. Structure de plancher (10) selon l'une quelconque des revendications 1 à 6, **caractérisée en ce que** chaque poutre de protection (22) présente au moins une cavité (222, 223, 224) s'étendant parallèlement au longeron, et chaque boîtier absorbeur de choc (24) présente au moins une cavité (242, 243, 244) s'étendant perpendiculairement aux longerons.

8. Structure de plancher (10) selon l'une quelconque des revendications 1 à 7, **caractérisée en ce que** chaque poutre de protection (22) et chaque boîtier absorbeur de choc (24) s'étend sur une hauteur, mesurée perpendiculairement à un plan contenant les longerons et les traverses, égale ou sensiblement égale à la hauteur des longerons.

9. Structure de plancher (10) selon l'une quelconque des revendications 1 à 8, **caractérisée en ce qu'**elle comprend une structure de support (50) d'au moins un module de stockage de l'énergie (40) fixée à la structure de plancher (10), sous celle-ci, la structure de support (50) s'étendant entre les longerons (140, 141) et les traverses (143) de la partie arrière (14) sur une portion de longueur de celle-ci,
et **en ce que** les dispositifs de protection latérale (20) s'étendent sur toute la longueur de cette portion de longueur de la partie arrière.

10. Véhicule automobile **caractérisé en ce qu'**il comprend une structure de plancher (10) selon l'une quelconque des revendications 1 à 9.
